# EUROPÄISCHE PATENTSCHRIFT

(11) **EP 2 677 910 B1**
(45) Veröffentlichungstag und Bekanntmachung des Hinweises auf die Patenterteilung: **08.05.2019**
(21) Anmeldenummer: 12705099.5
(22) Anmeldetag: 13.02.2012
(51) Int. Cl.: A47J 43/044, A47J 43/07

(54) **WERKZEUG UND ANTRIEBSEINRICHTUNG FÜR EIN MOTORBETRIEBENES KÜCHENGERÄT**
TOOL AND DRIVE DEVICE FOR A MOTOR DRIVEN KITCHEN APPLIANCE
OUTIL ET DISPOSITIF D'ENTRAÎNEMENT POUR APPAREIL DE CUISINE COMMANDÉ PAR UN MOTEUR

(30) Priorität: 21.02.2011 DE 102011004483
(43) Veröffentlichungstag der Anmeldung: 01.01.2014
(73) Patentinhaber: BSH Hausgeräte GmbH, 81739 München (DE)
(72) Erfinder: DECMAN, Igor, 3232 Ponikva (SI); DANIJEL, Roman, 3312 Ljubno (SI); SEMEJA, Uros, 3327 Smartno ob Paki (SI)
(86) Internationale Anmeldenummer: PCT/EP2012/052418
(87) Internationale Veröffentlichungsnummer: WO 2012/113667

(56) Entgegenhaltungen:
- WO-A1-2008/065595
- WO-A2-2007/141405
- DE-A1- 4 128 456
- FR-A1- 2 378 485

## Beschreibung

### Gebiet der Erfindung

Die Erfindung betrifft ein Werkzeug für ein motorbetriebenes Küchengerät, an dem ein Instrument für die Bearbeitung von Lebensmitteln angeordnet ist und das eine Antriebswelle aufweist, an deren Ende eine Kupplung ausgebildet ist. Die Erfindung betrifft außerdem eine Antriebseinrichtung zum Antreiben eines Werkzeuges für ein motorbetriebenes Küchengerät, das eine Gegenkupplung aufweist.

### Hintergrund der Erfindung

Aus WO 01/67937 A1 ist ein Bearbeitungsbehälter für Nahrungsmittel bekannt, umfassend einen Behälterdeckel und eine im Inneren angeordnete Werkzeugwelle mit angeordneten Bearbeitungswerkzeugen. Die Werkzeugwelle ist im Behälterdeckel und am Behälterboden drehbar gelagert und befindet sich hierbei in einer senkrechten Stellung. Da die Werkzeugwelle am Behälterboden außerdem kippbeweglich gelagert ist, wird die Werkzeugwelle bei Abnehmen des Behälterdeckels durch eine Kippstellung blockierbar. Dadurch wird ein sicherheitsrelevanter Bremsmechanismus bereitgestellt. Die Sicherheitsrisiken bei einer nicht ordnungsgemäßen Abnahme des Behälterdeckels sind nicht diskutiert.

Außerdem ist aus WO 02/32278 A1 ein Küchengerät bekannt, das einen Behälter, eine Abdeckung für den Behälter, eine Werkzeugeinheit und eine Antriebseinheit umfasst. Die Werkzeugeinheit ist im Behälter in einem Lager drehbar gelagert und ragt durch eine Öffnung in der Abdeckung zu einer Kupplung mit der Antriebseinheit. Außerdem ist die Werkzeugeinheit mit einer Bremseinrichtung ausgestattet, die deaktiviert ist, wenn die Antriebseinheit angekoppelt ist. Die Bremseinrichtung besteht aus Teilen, die bei Abkopplung der Antriebseinheit durch Reibung mit dem Behälter wechselwirken. Die Sicherheitsrisiken bei einer nicht ordnungsgemäßen Abkopplung der Antriebseinheit sind nicht diskutiert.

Ferner ist aus DE 4128456 A1 ein Zerkleinerungsgerät zum Zerkleinern von Nahrungsmitteln bekannt. Das Gerät umfasst einen Behälter, einen Deckel, ein als Messer ausgebildetes Arbeitswerkzeug, einen Lagerzapfen und eine Antriebswelle, die über eine Kupplungsvorrichtung mit einem Antrieb verbunden ist. Im Übertragungsweg zwischen Antrieb und Messer ist eine Bremse ausgebildet, die durch eine relative Verschiebung des Arbeitswerkzeuges gegenüber dem Lagerzapfen entgegen der Rückstellkraft einer Feder ein- und ausgeschaltet werden kann. Dieser Bremsmechanismus wird durch zwei gegeneinander reibende Teile bewirkt, die in Betriebsstellung keinen Kontakt haben, in der Lösestellung jedoch in Eingriff gebracht werden, wodurch das Arbeitswerkzeug abgebremst werden kann. Die Sicherheitsrisiken bei einer nicht ordnungsgemäßen Abkopplung des Antriebs oder der Kupplungsvorrichtung sind nicht diskutiert.

Ein weiteres Küchengerät gemäss Oberbegriff des Anspruchs 1 ist in der WO 2007/141405 A2 offenbart.

### Der Erfindung zugrunde liegende Aufgabe

Die zu lösende Aufgabe besteht darin, ein neues ein Instrument für die Bearbeitung von Lebensmitteln aufweisendes Werkzeug für ein motorbetriebenes Küchengerät bereitzustellen, mit dem die Sicherheit für den Fall einer Fehlbedienung des motorbetriebenen Küchengeräts, erhöht werden kann. Die zu lösende Aufgabe besteht weiterhin darin eine neue Antriebseinrichtung zum Antreiben eines Werkzeugs eines motorbetriebenen Küchengeräts bereitzustellen, mit dem die Sicherheit für den Fall einer Fehlbedienung des motorbetriebenen Küchengeräts erhöht werden kann. Mit dem Werkzeug und der Antriebseinrichtung soll ein Sicherheitsmechanismus ermöglicht werden, der sich bei der Herstellung einfach implementieren und von einer Bedienperson einfach und intuitiv handhaben lässt und der nicht notwendigerweise auf einer Bremseinrichtung basiert.

### Erfindungsgemäße Lösung

Die Aufgabe wird erfindungsgemäß durch einen Gegenstand gemäß dem Patentanspruch 1 gelöst. Das Werkzeug für ein motorbetriebenes Küchengerät, an dem ein Instrument für die Bearbeitung von Lebensmitteln angeordnet ist, weist eine Antriebswelle, an deren Ende eine Kupplung ausgebildet ist, und eine Hülle, die teilweise oder vollständig um die Kupplung herum angeordnet ist, auf, wobei das Werkzeug außerdem ein Rückstellmittel aufweist, und die Hülle durch die Rückstellkraft des Rückstellmittels in eine Kupplungsrichtung der Kupplung relativ zur Kupplung verschiebbar ist.

Mit der Kupplung kann das Werkzeug an eine Gegenkupplung des Küchengeräts angekoppelt werden, um die Antriebswelle anzutreiben. Im Sinne der vorliegenden Erfindung ist die Kupplungsrichtung der Kupplung die vorgesehene Richtung, in die die Kupplung auf die Gegenkupplung zu bewegt werden muss, um sie an die Gegenkupplung anzukoppeln.

Dadurch, dass die Hülle durch die Rückstellkraft des Rückstellmittels in eine Kupplungsrichtung der Kupplung verschiebbar ist, lässt sich mit der Erfindung erreichen, dass die Hülle als Auswurfelement die an die Gegenkupplung angekuppelte Kupplung von der Gegenkupplung trennen, also aus der Gegenkupplung auswerfen kann. Die Hülle kann zu diesem Zweck so ausgebildet und angeordnet sein, dass ein Koppeln der Kupplung der Antriebswelle an die Gegenkupplung unmöglich ist, wenn sich die Hülle in ihrer durch das Rückstellelement in Kupplungsrichtung verschobenen Ruhelage befindet.

Durch die Erfindung kann auch bei unsachgemäßer Nutzung, wie z.B. beim Öffnen des Deckels des Küchengerätes mit Werkzeug, während es noch in Betrieb ist, eine sofortige Trennung von rotierenden Schneideinstrumenten und der Gegenkupplung erfolgen sodass das Werkzeug nicht weiter angetrieben wird. Dadurch lässt sich verhindern, dass eine Bedienperson mit einem noch angetriebenen Werkzeug in Berührung kommt. Mit der Erfindung kann auf diese Weise Verletzungen vorgebeugt werden, die ein noch angetriebenes Werkzeug verursachen könnte. Insbesondere im Falle von Werkzeugen mit rotierenden Messern oder anderen Schneideinstrumenten könnte es hier zu schweren Verletzungen der Bedienperson kommen, z.B. zu Verletzungen des Hand-Arm Bereiches oder auch Oberkörper und Kopf.

Die Hülle ist teilweise oder vollständig um die Antriebswelle herum angeordnet ist. Mit "um die Antriebswelle herum" ist gemeint, dass die Hülle zumindest einen Abschnitt der Antriebswelle vollständig, d.h. auf 360 Grad umschließt. Neben ihrer Funktion als Auswurfelement kann die Hülle so vorteilhafterweise einem Verschmutzen der Antriebswelle durch das in dem Küchengerät bearbeitete Lebensmittel entgegenwirkt werden. Die Hülle besteht vorzugsweise aus einem einfach zu reinigenden, robusten und lebensmittelverträglichen Kunststoff. Neben der genannten und weiter unten in bevorzugten Ausführungen weiter beschriebenen Hülle kann das Werkzeug natürlich noch eine oder mehrere weitere Hüllen umfassen, die nicht als Auswurfelement wirken.

### Bevorzugte Ausgestaltung der Erfindung

Vorteilhafte Aus- und Weiterbildungen, sind Gegenstand der abhängigen Ansprüche.

Bei einem bevorzugten Werkzeug gemäß der Erfindung ist die Hülle gegen die Rückstellkraft des Rückstellmittels entgegen der Kupplungsrichtung verschiebbar. Hierdurch lässt sich vorteilhaft erreichen, dass das Auswurfelement beim Ankoppeln der Kupplung an die Gegenkupplung durch das Rückstellelement in Kupplungsrichtung vorgespannt wird, um zum späteren Entkuppeln durch die Rückstellkraft des Rückstellmittels in eine Kupplungsrichtung der Kupplung verschoben werden zu können.

Erfindungsgemäß ist die Kupplung als Teil der Antriebswelle einstückig ausgebildet. Eine einstückige Ausbildung von Kupplung und Antriebwelle kann eine einfache Herstellung ermöglichen, da beispielsweise keine zusätzlichen Arbeitsschritte zum Zusammensetzen zweier Bauteile benötigt werden. Vorzugsweise hat die Antriebswelle mit Kupplung eine gerade und langestreckte Form, jedoch sind auch andere z.B. gekrümmte Ausführungen denkbar. Weiterhin muss die vorgesehene Bewegung der Antriebswelle nicht nur in eine Rotationsbewegung sein, sondern es kann sich auch um eine andere Bewegung, z.B. eine Pendelbewegung handeln. Auch ist denkbar, dass die vorgesehene Bewegung der Antriebwelle eine Kombination aus einer Rotationsbewegung und einer anderen Bewegung, z.B. einer Pendelbewegung ist.

Vorzugsweise ist bei dem Werkzeug oder bei der Antriebseinrichtung zum Antreiben eines Werkzeuges für ein motorbetriebenes Küchengerät das Rückstellmittel zur Bereitstellung der Rückstellkraft, durch die die Hülle bzw. das Auswurfelement verschiebbar ist, eine Schraubenfeder. Dies kann vorteilhafterweise eine besonders einfache, preiswerte und funktionale Lösung sein, um die Rückstellkraft bereit zu stellen.

Alternativ zu einer Schraubenfeder sind natürlich auch zahlreiche andere Ausführungsformen des Rückstellmittels denkbar, z.B. eine Blattfeder, eine Spiralfeder oder ein Gaszylinder. Auch ist ein kompaktes elastisches Material, vorzugsweise ein elastisch verformbarer Kunststoff als Rückstellmittel denkbar.

In einer bevorzugten Ausführung der Erfindung ist auch die Kupplung als Teil der Antriebswelle teilweise oder ganz von der Hülle umgeben, was vorteilhafterweise eine Verschmutzung der Kupplung mit dem Lebensmittel verhindert. Besonders vorzugsweise ist die Kupplung in der durch das Rückstellmittel bestimmten Vorzugslage zumindest teilweise, besonders vorzugsweise vollständig in die Hülle aufgenommen. Besonders vorzugsweise kann die Kupplung durch verschieben der Hülle gegen die Rückstellkraft des Rückstellmittels teilweise, besonders vorzugsweise vollständig freigelegt werden.

Vorzugsweise sind sowohl die Antriebswelle als auch die Hülle des Werkzeugs in der Weise geformt, dass die Hülle und die Antriebswelle drehfest in Bezug auf die Längsachse der Antriebswelle ineinander greifen. Vorzugsweise ist an der Antriebswelle mindestens eine Nut und an der Hülle mindestens ein korrespondierender Steg ausgebildet, die drehfest ineinander greifen. Diese Konstruktion ermöglicht eine hohe Stabilität des Systems aus Hülle und Antriebswelle. Insbesondere ist die Hülle nicht relativ zur Antriebswelle rotierbar, was eine optimale Übertragung der Bewegung der Antriebswelle auf die Hülle ermöglicht.

Die drehfeste Anordnung von Antriebswelle und Hülle am Werkzeug ermöglicht wiederum in einer bevorzugten Ausführung, dass die Instrumente für die Bearbeitung von Lebensmitteln an der Hülle angeordnet werden können. Dies ermöglicht vorteilhafterweise eine einfache Montage des Bearbeitungsinstruments. Natürlich können an der Hülle auch mehrere Bearbeitungsinstrumente angeordnet sein.

Vorzugsweise ist das Rückstellelement im Werkzeug zwischen der Außenseite der Antriebswelle und der Innenseite der Hülle angeordnet, wobei das Rückstellelement die Antriebswelle umgibt und seinerseits von der Hülle umgeben ist. Umgeben bedeutet hierbei, dass das Rückstellelement wenigstens einen Abschnitt der Antriebswelle vollständig, d.h. auf d.h. auf 360 Grad umschließt. Vorzugsweise ist hier eine Schraubenfeder zwischen Hülle und Antriebswelle angeordnet, jedoch ist z.B. auch ein langgestreckter Hohlzylinder aus einem elastischen Kunststoff möglich. Diese Anordnung kann insbesondere deshalb vorteilhaft sein, weil die Positionierung des Rückstellmittels platzsparend ist und dementsprechend das gesamte Werkzeug wenig Raum in einem Behälter für Lebensmittel einnimmt.

Erfindungsgemäss ist die Hülle mit dem Rückstellmittel einteilig. Das Rückstellmittel einteilig mit der Hülle auszubilden ist eine einfache und effiziente Realisierung der Erfindung, da Auswurfelement und Rückstellelement auf ein Teil reduziert werden können.

In einer bevorzugten Ausführung der Erfindung weist das Werkzeug an seinem kupplungsabgewandten Ende ein Gegenlager zum Anordnen des Werkzeugs auf. Das Gegenlager kann vorteilhafterweise dazu benutzt werden, das Werkzeug auf einem Lager, z.B. einem Lagerzapfen, anzubringen, das sich vorzugsweise in einem Behälter des Küchengeräts, z.B. einer Rühr- oder Mixschüssel, befindet, in den die Lebensmittel, die mit dem am Werkzeug angeordneten Instrumenten bearbeitet werden sollen, zur Bearbeitung eingefüllt werden können. Das Gegenlager wird in einer bevorzugten Ausführung von dem kupplungsabgewandten Ende der Hülle gebildet. Das Gegenlager kann die Hülle in dieser Ausführung insbesondere auf ihrer kupplungsabgewandten Seite abschließen. Dadurch können Hülle und Gegenlager gemeinsam vorteilhafterweise einen besonders guten Schutz der Antriebwelle vor Eindringen von Lebensmittel, die bearbeitet werden, bieten. Vorzugsweise ist das Gegenlager mittig mit einer Öffnung versehen, durch die das kupplungsabgewandte Ende der Antriebswelle tritt, um auf dem Lager aufzusitzen.

In einer bevorzugten Ausführung ist das Werkzeug im Gegenlager mit der aus DE 41 28 456 A1 bekannten Bremse ausgestattet, die mit dem Lagezapfen zusammenwirken kann. In einer anderen Ausführung der Erfindung ist das Werkzeug so ausgebildet, dass es unabhängig von der relativen Lage von Hülle und Antriebswelle mit seinem Gegenlager auf einem korrespondierenden Lagerzapfen frei drehbar ist.

In einer bevorzugten Ausführung des erfindungsgemäßen Werkzeugs ist das Instrument für die Bearbeitung von Lebensmitteln ein Messer. Ein Messer ist im Sinne der vorliegenden Erfindung ein Instrument, das zumindest eine Schneide aufweist. Das Messer kann z.B. zum Zerkleinern oder zum Schälen von Lebensmitteln ausgebildet sein. Ein bevorzugtes Messer umfasst zwei Schneiden, die an gegenüberliegenden, radial vom Werkzeug weg weisenden Blättern des Messers ausgebildet sind. Bei einem scharfen Schneideinstrument ist ein Sicherheitsmechanismus, wie es die Erfindung bereitstellt, von besonders großer Bedeutung, da das Risiko für Schnittverletzungen sehr hoch ist. Neben einem Messer, bzw. neben Schneideinstrumenten im Allgemeinen, sind vorzugsweise auch andere Bearbeitungsinstrumente denkbar, wie Instrumente zum Vermengen und Mischen, z.B. Knethaken oder Schneebesen. Natürlich kann das Werkzeug auch mehrere Instrumente aufweisen.

In einer bevorzugten Ausführung des erfindungsgemäßen Werkzeugs ist die Hülle zwischen der Antriebswelle und dem Auswurfelement vorgespannt. Dies kann in einfacher Weise im Falle der Schraubenfeder als Rückstellmittel durch das Vorspannen der Schraubenfeder an einer Schulter an der Innenseite der Hülle und eine korrespondierenden Schulter an der Außenseite der Antriebswelle verwirklicht werden.

Die Erfindung eignet sich besonders für Küchengeräte vom Typ eines Standmixers oder einer Standküchenmaschine. Insbesondere lässt sie sich bei solchen Küchengeräten vorteilhaft einsetzen, bei denen das Werkzeug bei vorgesehenem Gebrauch von der Gegenkupplung aus gesehen von unten an Gegenkupplung angekoppelt wird. Bei einem bevorzugten Küchengerät ist die Antriebseinrichtung, die die Gegenkupplung umfasst, als Deckel ausgebildet, der den Behälter des Küchengeräts abdeckt. Der Deckel kann einen Motor aufweisen oder eine Motorkupplung, an die eine einen Motor enthaltende Komponente, z.B. ein Handrührer, zum Antrieb angekoppelt werden kann, um die Antriebseinrichtung anzutreiben, die wiederum via Gegenkupplung der Antriebseinrichtung und Kupplung des Werkzeugs das Werkzeug antreibt.

### Kurzbeschreibung der Figuren

Weitere vorteilhafte Ausgestaltungen der Erfindung werden nachfolgend an Hand eines in den Zeichnungen dargestellten Ausführungsbeispiels, auf welches die Erfindung jedoch nicht beschränkt ist, näher beschrieben.

Es zeigen schematisch:
Fig. 1 einen Querschnitt einer motorbetriebenen Küchenmaschine mit einem ein Auswurfelement umfassenden Werkzeug und einer als Deckel ausgebildeten aufgesetzten Antriebseinheit;
Fig. 2 einen Querschnitt einer motorbetriebenen Küchenmaschine mit einem ein Auswurfelement umfassenden Werkzeug und einer als Deckel ausgebildeten teilweise abgenommene Antriebseinheit; und
Fig. 3 einen Querschnitt einer motorbetriebenen Küchenmaschine mit einem ein Auswurfelement umfassenden Werkzeug und einer als Deckel ausgebildeten abgenommene Antriebseinheit.

### Detaillierte Beschreibung einer Ausführung der Erfindung

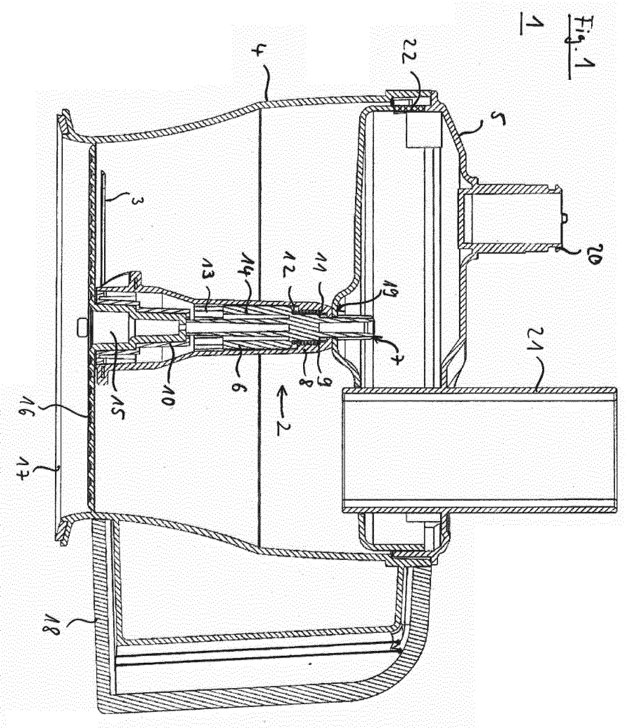

Das Ausführungsbeispiel wird im Folgenden anhand von Figuren 1 bis 3 erläutert. Fig. 1 dient zur Beschreibung des Aufbaus des motorbetriebenen Küchengerätes 1 nach der Erfindung und der Funktion der einzelnen Bestandteile, während durch Vergleich der Figuren 1 bis 3 der Mechanismus der Ausführung der Erfindung näher erläutert wird.

Fig. 1 zeigt ein motorbetriebenes Küchengerät 1, umfassend ein Werkzeug 2 mit einem Messer 3 als Instrument zum Bearbeiten von Lebensmitteln, einem Behälter 4 in dem das Werkzeug 2 angeordnet ist, und einer als Behälterdeckel 5 ausgebildeten Antriebseinheit, die den Behälter 4 abdeckt. Weiterhin gehört zu dem motorbetriebenen Küchengerät 1 eine in Fig.1 jedoch nicht dargestellte Motoreinheit, z.B. ein Handmixer, mit einem Motor zum Antreiben eines ebenfalls nicht dargestellten Getriebes der Antriebseinheit, das wiederum das Werkzeug 2 antreibt. Der Behälterdeckel 5 des Küchengerätes 1 ist abnehmbar und das Werkzeug 2 ist aus dem Behälter 4 entnehmbar.

Das Werkzeug 2 im motorbetriebenen Küchengerät 1 in Fig.1 umfasst ein Messer 3, eine Antriebswelle 6, eine Kupplung 7, eine Hülle 8 als Auswurfelement, eine Schraubenfeder 9 als Rückstellmittel und ein Gegenlager 10. Die Kupplung 7 ist als Teil der Antriebswelle 6 einstückig an einem Ende der Antriebswelle 6 ausgebildet. Mit der Kupplung 7 kann die Antriebswelle des Werkzeugs an eine Gegenkupplung (nicht gezeigt) des Getriebes der Antriebseinheit angekoppelt werden, um die Antriebswelle 6 anzutreiben. Die Hülle 8 ist um die Antriebswelle 6 und teilweise um die Kupplung 7 herum angeordnet und axial relativ zur Kupplung 7 und zur Antriebswelle 6 verschiebbar. Die Verschiebung der Hülle 8 in Richtung des kupplungsabgewandten Endes des Werkzeuges 2 erfolgt entgegen der Rückstellkraft der Schraubenfeder 9.

Die Schraubenfeder 9 ist, wie in Fig.1 zu sehen, zwischen der Außenseite der Antriebswelle 6 und der Innenseite der Hülle 8 angeordnet, wobei die Schraubenfeder 9 die Antriebswelle 6 umgibt und von der Hülle 8 eingeschlossen ist. Weiterhin ist die Schraubenfeder 9 zwischen einer nach innen ragenden Schulter 11 der Hülle 8 und einer nach außen ragenden Schulter 12 der Antriebswelle 6 vorgespannt. An der Innenseite ist die Hülle 8 mit Nuten 13 versehen. Um mit der Hülle 8 ineinander greifen zu können und eine Übertragung der Bewegung der Antriebswelle 6 auf die Hülle 8 zu garantieren, ist die Antriebswelle 6 mit den zu den Nuten 13 korrespondierenden Längsstegen 14 ausgestattet.

Das Messer 3 ist in der Ausführung in Fig.1 an der Hülle 8 des Werkzeuges 2 angeordnet. Die Übertragung der Bewegung des Motors erfolgt über die Antriebswelle 6 auf die Hülle 8 und wiederum auf das Messer 3. Durch die rotierende Bewegung des Messers 3 können Lebensmittel, die sich im Behälter 4 befinden, zerkleinert werden. Am kupplungsabgewandten Ende des Werkzeuges 2 sitzt die Antriebswelle 6 auf einem Lagerzapfen 15 des Behälters auf. Ein korrespondierendes Gegenlager 10 mit der inversen Form des Lagerzapfens 15 ist am kupplungsabgewandten Ende des Werkzeugs in Fig. 1 zu sehen. Das Gegenlager 10 ist an der Hülle 8 befestigt und dementsprechend, wie auch das Messer 3, axial mit der Hülle 8 relativ zur Kupplung 7 und zur Antriebswelle verschiebbar.
Der Lagerzapfen 15 ist am Behälterboden 16 des Behälters 4 angebracht und wird von einem Teil des Behälterbodens 16 umschlossen. Der Behälter 4 weist außerdem einen Sockel 17 auf, der sich an den Behälterboden 16 anschließt, und einen Haltegriff 18 an einer Seitenwand des Behälters 4 aus.

Der Behälterdeckel 5 mit einem Gegenauswurfelement 19 kann dicht auf dem Behälter 4 aufsitzen. Außerdem umfasst der Behälterdeckel 5 eine Motorkupplung 20 zur Ankupplung der Motoreinheit und eine Einfüllmöglichkeit für Lebensmittel 21, die bei geschlossenem Behälterdeckel 5 das Nachfüllen von Lebensmitteln ermöglicht. Weiterhin kann der Behälterdeckel 5 mit dem Behälter 4 fest durch einen Verriegelungsmechanismus 22 von der Art eines Bajonettverschlusses, der sich in Drehrichtung der Antriebswelle 6 öffnen lässt, verschlossen werden.

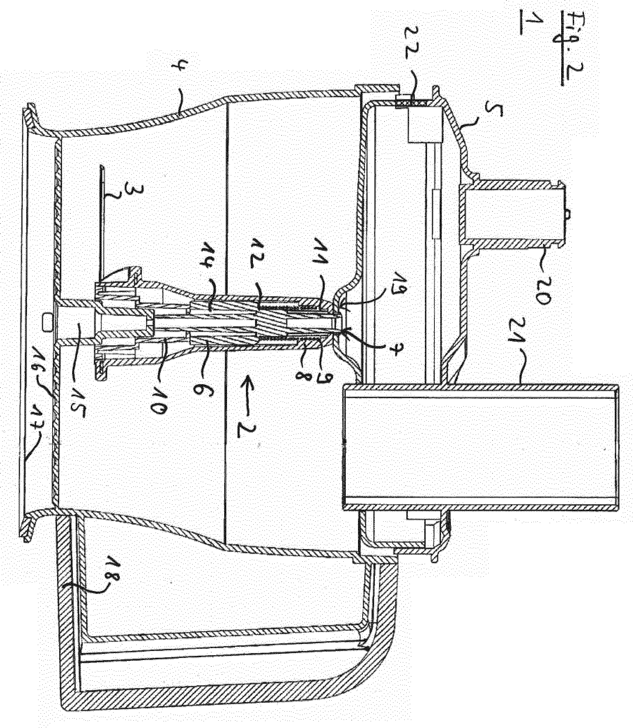

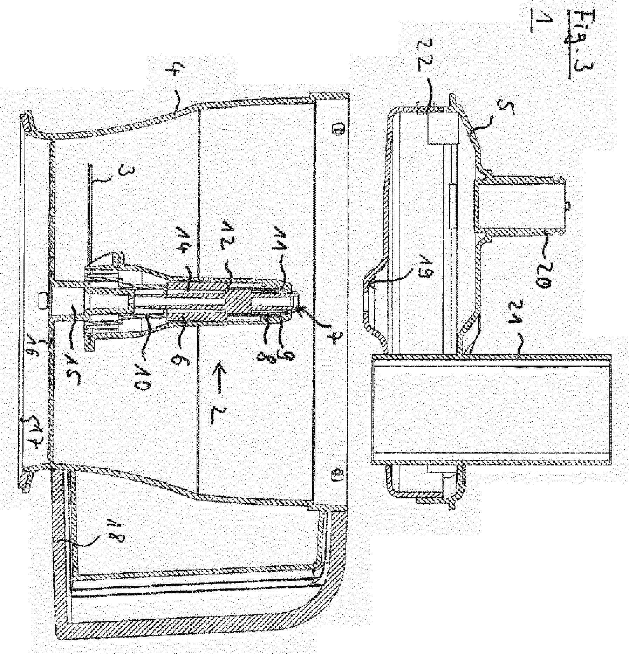

In Fig.1 ist das Küchengerät in Betriebsstellung. Der Behälterdeckel 5 sitzt dicht auf dem Behälter 4 auf und ist mittels des Verriegelungsmechanismus 22 fest mit dem Behälter 4 verriegelt. Die Kupplung 7 des Werkzeugs 2 greift in die Gegenkupplung des Behälterdeckels 4 ein, sodass das Werkzeug rotierend angetrieben werden kann. Das Gegenauswurfelement 19 des Behälterdeckels 5 hat die Hülle 8 in Richtung der kupplungsabgewandten Seite des Werkzeuges 2 relativ zur Kupplung 7 entgegen der Rückstellkraft der Schraubenfeder 9 verschoben. Wird der Behälterdeckel 5 entriegelt und anschließend angehoben, verschiebt sich Hülle 8 aufgrund der Rückstellkraft der Schraubenfeder 9 in Richtung der Kupplung 7 bis zu einer Stellung in der die Hülle 8 die Kupplung 7 fast vollständig umschließt. Dabei greift die Hülle an das Gegenauswurfelement 19 des Behälterdeckels 5 an, was zur Folge hat, dass die Kupplung 7 des Werkzeugs 2 entgegen der Kupplungsrichtung aus der Gegenkupplung herausgleitet. Hierzu vergleiche man die Stellung der Hülle 8 in Fig. 1, Fig. 2 und Fig. 3. Fig. 3 zeigt einen vom Behälter getrennten Behälterdeckel 5. Fig. 2 zeigt einen Zustand zwischen vollständig verriegeltem Behälterdeckel 5 und einer vollständigen Trennung des Behälterdeckels 5. Mit anderen Worten, das Werkzeug 2 wird beim Abnehmen des Behälterdeckels 5 aufgrund der Rückstellkraft der Schraubenfeder 9 aus dem Behälterdeckel ausgeworfen. Das Werkzeug 2 in Fig. 3 kann deshalb, im Gegensatz zu Fig. 1, nicht mehr angetrieben werden.

Dadurch, dass das Werkzeug 2 beim Abnehmen des Behälterdeckels 5 sofort von diesem getrennt wird, lässt sich verhindern, dass eine Bedienperson mit einem noch angetriebenen Werkzeug 2 in Berührung kommt. Mit der Erfindung kann auf diese Weise Verletzungen vorgebeugt werden, die ein noch angetriebenes Werkzeug 2 verursachen könnte. Insbesondere könnte hierdurch schweren durch das Messer 3 verursachte Verletzungen der Bedienperson, z.B. zu Verletzungen des Hand-Arm Bereiches oder auch Oberkörper und Kopf, verhindert werden.

## Patentansprüche

1. Werkzeug (2) für ein motorbetriebenes Küchengerät (1), an dem ein Instrument (3) für die Bearbeitung von Lebensmitteln angeordnet ist und das eine Antriebswelle (6), an deren Ende eine Kupplung (7) ausgebildet ist, und eine Hülle (8), die teilweise oder vollständig um die Antriebswelle (6) herum angeordnet ist, aufweist, wobei das Werkzeug (2) ein Rückstellmittel (9) aufweist, und die Hülle (8) durch die Rückstellkraft des Rückstellmittels (9) in eine Kupplungsrichtung der Kupplung (7) relativ zur Kupplung (7) verschiebbar ist, wobei die Kupplung (7) als Teil der Antriebswelle (6) einstückig ausgebildet ist, **dadurch gekennzeichnet, dass** die Hülle (8) mit dem Rückstellmittel (9) einteilig ist.

2. Werkzeug (2) für ein motorbetriebenes Küchengerät (1) nach Anspruch 1, **dadurch gekennzeichnet, dass** das Rückstellmittel (9) zur Bereitstellung der Rückstellkraft, durch die die Hülle (8) verschiebbar ist, eine Schraubenfeder (9) ist.

3. Werkzeug (2) für ein motorbetriebenes Küchengerät (1) nach einem der vorangehenden Ansprüche, **dadurch gekennzeichnet, dass** sowohl die Antriebswelle (6) als auch die Hülle (8) in der Weise geformt sind, dass die Hülle (8) und die Antriebswelle (6) drehfest in Bezug auf die Längsachse der Antriebswelle (6) ineinander greifen.

4. Werkzeug (2) für ein motorbetriebenes Küchengerät (1) nach einem der vorangehenden Ansprüche, **dadurch gekennzeichnet, dass** das Instrument (3) für die Bearbeitung von Lebensmitteln an der Hülle (8) angeordnet ist.

5. Werkzeug (2) für ein motorbetriebenes Küchengerät (1) nach einem der vorangehenden Ansprüche, **dadurch gekennzeichnet, dass** das Rückstellmittel (9) zwischen der Außenseite der Antriebswelle (6) und der Innenseite der Hülle (8) angeordnet ist, wobei das Rückstellelement (9) die Antriebswelle (6) umgibt und von der Hülle (8) umgeben ist.

6. Werkzeug (2) für ein motorbetriebenes Küchengerät (1) nach einem der vorangehenden Ansprüche, **dadurch gekennzeichnet, dass** das Werkzeug (2) an seinem kupplungsabgewandten Ende ein Gegenlager (10) zur Anordnung des Werkzeugs (2) aufweist.

7. Werkzeug (2) nach Anspruch 6, **dadurch gekennzeichnet, dass** das Gegenlager (10) von einem kupplungsabgewandten Ende der Hülle (8) gebildet ist und die Hülle (8) auf ihrer kupplungsabgewandten Seite abschließt.

8. Werkzeug (2) für ein motorbetriebenes Küchengerät (1) nach einem der vorangehenden Ansprüche, **dadurch gekennzeichnet, dass** das Instrument (3) für die Bearbeitung von Lebensmitteln ein Messer (3) ist.

9. Werkzeug (2) für ein motorbetriebenes Küchengerät (1) nach einem der vorangehenden Ansprüche, **dadurch gekennzeichnet, dass** das Rückstellmittel (9) zwischen der Antriebswelle (6) und der Hülle (8) vorgespannt ist.

## Claims

1. Tool (2) for a motor-driven kitchen appliance (1), on which an instrument (3) for the processing of foodstuffs is arranged and which has a drive shaft (6), on the end of which a coupling (7) is embodied, and a sleeve (8), which is partially or completely arranged around the drive shaft (6), wherein the tool (2) has a reset means (9), and the sleeve (8) is able to be displaced by the reset force of the reset means (9) in a coupling direction of the coupling (7) relative to the coupling (7), wherein the coupling (7) is embodied in an integrated manner as part of the drive shaft (6), **characterised in that** the sleeve (8) is integrated with the reset means (9).

2. Tool (2) for a motor-driven kitchen appliance (1) according to claim 1, **characterised in that** the reset means (9) for providing the reset force, by way of which the sleeve (8) is able to be displaced, is a helical spring (9).

3. Tool (2) for a motor-driven kitchen appliance (1) according to one of the preceding claims, **characterised in that** both the drive shaft (6) and also the sleeve (8) are shaped in such a way that the sleeve (8) and the drive shaft (6) interlock with one another in a rotationally fixed manner in relation to the longitudinal axis of the drive shaft (6).

4. Tool (2) for a motor-driven kitchen appliance (1) according to one of the preceding claims, **characterised in that** the instrument (3) for the processing of foodstuffs is arranged on the sleeve (8).

5. Tool (2) for a motor-driven kitchen appliance (1) according to one of the preceding claims, **characterised in that** the reset means (9) is arranged between the outer side of the drive shaft (6) and the inner side of the sleeve (8), wherein the reset element (9) surrounds the drive shaft (6) and is surrounded by the sleeve (8).

6. Tool (2) for a motor-driven kitchen appliance (1) according to one of the preceding claims, **characterised in that** the tool (2), on its end facing away from the coupling, has a counter-bearing (10) for the arrangement of the tool (2).

7. Tool (2) according to claim 6, **characterised in that** the counter-bearing (10) is formed by an end of the sleeve (8) facing away from the coupling and closes off the sleeve (8) at its side facing away from the coupling.

8. Tool (2) for a motor-driven kitchen appliance (1) according to one of the preceding claims, **characterised in that** the instrument (3) for the processing of foodstuffs is a blade (3).

9. Tool (2) for a motor-driven kitchen appliance (1) according to one of the preceding claims, **characterised in that** the reset means (9) is pretensioned between the drive shaft (6) and the sleeve (8).

## Revendications

1. Outil (2) pour un appareil de cuisine (1) commandé par moteur, sur lequel est disposé un instrument (3) pour le traitement de produits alimentaires et lequel présente un arbre d'entraînement (6) à l'extrémité duquel est réalisé un accouplement (7), et une enveloppe (8) qui est disposée en partie ou entièrement autour de l'arbre d'entraînement (6), l'outil (2) présentant un moyen de rappel (9), et l'enveloppe (8) étant déplaçable par rapport à l'accouplement (7) dans un sens de couplage de l'accouplement (7) au moyen de la force de rappel du moyen de rappel (9), l'accouplement (7) étant réalisé d'une seule pièce en tant que partie de l'arbre d'entraînement (6), **caractérisé en ce que** l'enveloppe (8) est d'une seule pièce avec le moyen de rappel (9).

2. Outil (2) pour un appareil de cuisine (1) commandé par moteur, selon la revendication 1, **caractérisé en ce que** le moyen de rappel (9) destiné à fournir la force de rappel, au moyen de laquelle l'enveloppe (8) est déplaçable, est un ressort hélicoïdal (9).

3. Outil (2) pour un appareil de cuisine (1) commandé par moteur, selon l'une quelconque des revendications précédentes, **caractérisé en ce qu'**aussi bien l'arbre d'entraînement (6) que l'enveloppe (8) sont formés de manière à ce que l'enveloppe (8) et l'arbre d'entraînement (6) aient prise l'un dans l'autre de manière solidaire en rotation par rapport à l'axe longitudinal de l'arbre d'entraînement (6).

4. Outil (2) pour un appareil de cuisine (1) commandé par moteur, selon l'une quelconque des revendications précédentes, **caractérisé en ce que** l'instrument (3) pour le traitement de produits alimentaires est disposé sur l'enveloppe (8).

5. Outil (2) pour un appareil de cuisine (1) commandé par moteur, selon l'une quelconque des revendications précédentes, **caractérisé en ce que** le moyen de rappel (9) est disposé entre le côté extérieur de l'arbre d'entraînement (6) et le côté intérieur de l'enveloppe (8), l'élément de rappel (9) entourant l'arbre d'entraînement (6) et étant entouré par l'enveloppe (8).

6. Outil (2) pour un appareil de cuisine (1) commandé par moteur, selon l'une quelconque des revendications précédentes, **caractérisé en ce que** l'outil (2) présente sur son extrémité détournée de l'accouplement une butée (10) pour la disposition de l'outil (2).

7. Outil (2) selon la revendication 6, **caractérisé en ce que** la butée (10) est formée par une extrémité de l'enveloppe (8), détournée de l'accouplement, et ferme l'enveloppe (8) sur son côté détourné de l'accouplement.

8. Outil (2) pour un appareil de cuisine (1) commandé par moteur, selon l'une quelconque des revendications précédentes, **caractérisé en ce que** l'instrument (3) pour le traitement de produits alimentaires est une lame (3).

9. Outil (2) pour un appareil de cuisine (1) commandé par moteur, selon l'une quelconque des revendications précédentes, **caractérisé en ce que** le moyen de rappel (9) est précontraint entre l'arbre d'entraînement (6) et l'enveloppe (8).
